# EUROPÄISCHE PATENTANMELDUNG

(11) **EP 2 017 293 A1**
(43) Veröffentlichungstag der Anmeldung: **21.01.2009**
(21) Anmeldenummer: 07112757.5
(22) Anmeldetag: 19.07.2007
(51) Int. Cl.: C08F 2/40

(54) **Gemische, enthaltend Inhibitoren der radikalischen Polymerisation und ionische Flüssigkeiten, und ihre Verwendung zur Stabilisierung von radikalisch polymerisierbaren Monomeren**

(71) Anmelder: BASF SE, 67056 Ludwigshafen (DE)
(72) Erfinder: Lipowsky, Gunter Dr., 69198, Schriesheim (DE); Degen, Georg, 64653, Lorsch (DE)
(74) Vertreter: Fitzner, Uwe

(57) **Zusammenfassung**

Gemische, enthaltend mindestens einen Inhibitor der radikalischen Polymerisation und mindestens eine ionische Flüssigkeit, Verfahren zu ihrer Herstellung und ihre Verwendung zur Stabilisierung von radikalisch polymerisierbaren Monomeren gegen die radikalische Polymerisation sowie gegen die radikalische Polymerisation stabilisierte Gemische, enthaltend mindestens ein radikalisch polymerisierbares Monomer, mindestens eine ionische Flüssigkeit und mindestens einen Inhibitor der radikalischen Polymerisation.

## Beschreibung

### Gebiet der Erfindung

Die vorliegende Erfindung betrifft neue Gemische, enthaltend Inhibitoren der radikalischen Polymerisationen und ionische Flüssigkeiten. Außerdem betrifft die vorliegende Erfindung ein neues Verfahren zur Herstellung von Gemischen, enthaltend Inhibitoren der radikalischen Polymerisation und ionische Flüssigkeiten. Des Weiteren betrifft die vorliegende Erfindung die neuartige Verwendung der neuen Gemische, enthaltend Inhibitoren der radikalischen Polymerisation und ionische Flüssigkeiten zur Stabilisierung von radikalisch polymerisierbaren Monomeren. Nicht zuletzt betrifft die vorliegende Erfindung neue, gegen die radikalische Polymerisation stabilisierte Gemische, enthaltend radikalisch polymerisierbare Monomere, ionische Flüssigkeiten und Inhibitoren der radikalischen Polymerisation.

### Stand der Technik

Ionische Flüssigkeiten bestehen ausschließlich aus Ionen (Kationen und Anionen). Prinzipiell sind ionische Flüssigkeiten Salzschmelzen mit niedrigem Schmelzpunkt. Man rechnet nicht nur die bei der Umgebungstemperatur flüssigen, sondern auch alle unter 100°C schmelzenden Salzverbindungen dazu. Im Gegensatz zu herkömmlichen anorganischen Salzen wie Kochsalz (Schmelzpunkt 808°C) sind bei ionischen Flüssigkeiten durch Ladungsdelokalisierung Gitterenergie und Symmetrie verringert, was zur Erstarrungspunkten bis zu -80°C und darunter führen kann. Aufgrund der zahlreichen Kombinationsmöglichkeiten von Anionen und Kationen lassen sich ionische Flüssigkeiten mit sehr unterschiedlichen Eigenschaften herstellen (vgl. a. Römpp Online 2007, »ionische Flüssigkeiten«).

Die Verwendung von ionischen Flüssigkeiten als Lösemittel und als Inhibitoren der radikalischen Polymerisation von Vinylmonomeren wie Methylmethacrylat ist aus der chinesischen Patentanmeldung CN 1562921 A bekannt. Ihre inhibierende Wirkung lässt jedoch zu wünschen übrig.

Außerdem ist die Verwendung von ionischen Flüssigkeiten, die Acrylat- oder Methacrylat-Anionen enthalten, als Monomere zur Herstellung von Polyelektrolyten aus der chinesischen Patentanmeldung CN 1580029 A bekannt. Ob diese ionischen Flüssigkeiten als Inhibitoren der radikalischen Polymerisation von Vinylmonomeren verwendet werden können, geht aus der chinesischen Patentanmeldung nicht hervor. Ihre Verwendung als reaktive Monomere spricht eher dagegen.

Aus der deutschen Patentanmeldung DE 100 36 959 A1 ist die Verwendung von Inhibitoren der radikalischen Polymerisation, wie Hydrochinon, Hydrochinonmonomethylether, p-Benzochinon, p-Nitrosophenol (PNP), Phenothiazin (PTZ), 4-Hydroxy-2,2,6,6-tetramethyl-1-oxyl-piperidin (OH-Tempo) oder Methylenblau, zur Stabilisierung von Acrylsäure und Methacrylsäure gegen die radikalische Polymerisation bekannt. Bei großtechnischen Prozessen, wie beispielsweise die kontinuierliche Veresterung von Acrylsäure oder Methacrylsäure, müssen diese Inhibitoren in der Form hoch verdünnter Lösungen in Acrylsäure oder Methacrylsäure zugesetzt werden, was apparativ und sicherheitstechnisch aufwändig ist. Außerdem müssen vergleichsweise hohe Konzentrationen an Inhibitoren verwendet werden, was im Falle des häufig verwendeten PTZ zu einer vergleichsweise hohen Schwefelbeladung im Prozess führt.

### Aufgabe

Der vorliegenden Erfindung liegt die Aufgabe zu Grunde, eine neue Verwendung für ionische Flüssigkeiten bereitzustellen.

Außerdem liegt der vorliegenden Erfindung die Aufgabe zu Grunde, neue Gemische zu finden, die ionische Flüssigkeiten enthalten und die sich bereits in geringen Konzentrationen hervorragend als Inhibitoren der radikalischen Polymerisation von radikalisch polymerisierbaren Monomeren, insbesondere Vinylmonomeren, eignen. Die neue Gemische, die ionische Flüssigkeiten enthalten, sollen darüber hinaus in ihrem anwendungstechnischen Eigenschaftsprofil besonders breit variiert und hervorragend an die Erfordernisse des Einzelfalles angepasst werden können.

Des Weiteren liegt der vorliegenden Erfindung die Aufgabe zu Grunde, ein neues Verfahren zur Herstellung der neuen Gemische zu finden, das in einfacher und sehr gut reproduzierbarer Weise neue Gemische der unterschiedlichsten stofflichen Zusammensetzung und des unterschiedlichsten anwendungstechnischen Eigenschaftsprofils liefert.

Nicht zuletzt liegt der vorliegenden Erfindung die Aufgabe zu Grunde, neue gegen die radikalische Polymerisation stabilisierte Gemische, die mindestens ein radikalisch polymerisierbares Monomer enthalten, zu finden. Die neuen, gegen die radikalische Polymerisation stabilisierten Gemische sollen bereits mit geringen Konzentrationen an Inhibitoren auch bei erhöhten Temperaturen nach mehreren Stunden nicht polymerisieren.

Insbesondere sollen die neuen gegen die radikalische Polymerisation stabilisierten Gemische, die Acrylsäure oder Methacrylsäure enthalten, die Lagerung und die Handhabung der Acrylsäure oder Methacrylsäure vereinfachen und die Ausbeuten bei ihrer Veresterung, insbesondere ihrer großtechnischen Veresterung, erhöhen. Im Falle der Verwendung von schwefelhaltigen Inhibitoren wie PTZ soll auch die Schwefelbeladung im Prozess signifikant verringert werden können.

### Erfindungsgemäße Lösung

Demgemäß wurden die neuen Gemische, enthaltend mindestens einen Inhibitor der radikalischen Polymerisation und mindestens eine ionische Flüssigkeit, gefunden, die im Folgenden als »erfindungsgemäße Gemische« bezeichnet werden.

Außerdem wurde das neue Verfahren zur Herstellung der erfindungsgemäßen Gemische gefunden, bei dem man mindestens eine ionische Flüssigkeit mit mindestens einem Inhibitor der radikalischen Polymerisation vermischt und das resultierende Gemisch homogenisiert. Im Folgenden wird das neue Verfahren zur Herstellung der erfindungsgemäßen Gemische als »erfindungsgemäßes Verfahren« bezeichnet.

Des Weiteren wurde die neue Verwendung der findungsgemäßen Gemische und der nach dem erfindungsgemäßen Verfahren hergestellten erfindungsgemäßen Gemische zur Stabilisierung von radikalisch polymerisierbaren Monomeren gegen die radikalische Polymerisation gefunden, was im Folgenden als »erfindungsgemäße Verwendung« bezeichnet wird.

Nicht zuletzt wurden die neuen gegen die radikalische Polymerisation stabilisierten Gemische gefunden, die mindestens ein radikalisch polymerisierbares Monomer, mindestens eine ionische Flüssigkeit und mindestens einen Inhibitor der radikalischen Polymerisation enthalten und die im Folgenden »als erfindungsgemäße stabilisierte Gemische« bezeichnet werden.

### Vorteile der Erfindung

Im Hinblick auf den Stand der Technik war es überraschend und für den Fachmann nicht vorhersehbar, dass die Aufgabe, die der vorliegenden Erfindung zu Grunde lag, mit Hilfe der erfindungsgemäßen Gemische, des erfindungsgemäßen Verfahrens, der erfindungsgemäßen Verwendung und der erfindungsgemäßen stabilisierten Gemische gelöst werden konnte.

Insbesondere war es überraschend, dass sich die erfindungsgemäßen Gemische im Rahmen der erfindungsgemäßen Verwendung bereits in geringen Konzentrationen hervorragend als Inhibitoren der radikalischen Polymerisation von radikalisch polymerisierbaren Monomeren, insbesondere Vinylmonomeren, eigneten. Die erfindungsgemäßen Gemische konnten darüber hinaus in ihrem anwendungstechnischen Eigenschaftsprofil besonders breit variiert und hervorragend an die Erfordernisse des Einzelfalles angepasst werden.

Außerdem war es überraschend, dass das erfindungsgemäße Verfahren in besonders einfacher und sehr gut reproduzierbarer Weise erfindungsgemäße Gemische der unterschiedlichsten stofflichen Zusammensetzung und des unterschiedlichsten anwendungstechnischen Eigenschaftsprofils lieferte.

Noch mehr überraschte, dass die erfindungsgemäßen stabilisierten Gemische bereits in der Gegenwart vergleichsweise geringer Konzentrationen an Inhibitoren auch bei erhöhten Temperaturen nach mehreren Stunden nicht polymerisierten.

Insbesondere vereinfachten die erfindungsgemäßen stabilisierten Gemische, die Acrylsäure oder Methacrylsäure enthielten, die Lagerung und die Handhabung der Acrylsäure oder Methacrylsäure und erhöhten die Ausbeuten bei ihrer Veresterung, insbesondere bei ihrer großtechnischen Veresterung, in einem nicht erwartbaren Ausmaß. Im Falle der Verwendung von schwefelhaltigen Inhibitoren wie PTZ konnte hierbei auch die Schwefelbeladung im Prozess signifikant verringert werden.

### Ausführliche Beschreibung der Erfindung

Die erfindungsgemäßen Gemische enthalten mindestens einen, insbesondere einen, Inhibitor der radikalischen Polymerisation.

Bekanntermaßen handelt es sich bei der radikalischen Polymerisation um eine Kettenreaktion, bei der im Initiierungsschritt Radikale gebildet werden, an die sich die zu polymerisierenden Monomeren so lange anlagern, bis ein Abbruch durch Kombination oder Disproportionierung zweier Makroradikale oder deren Reaktion mit Reglersubstanzen oder Verunreinigungen wie Sauerstoff eintritt (vgl. a. Römpp Online, 2007, »Radikalische Polymerisation«).

Bekanntermaßen wirken die Inhibitoren als Radikalfänger und hemmen so die Bildung von Radikalen im Initiierungsschritt der Kettenreaktion (vgl. a. Römpp Online, 2007, »Inhibierung«).

Als Inhibitoren können übliche und bekannte Radikalfänger verwendet werden. Dabei kann es sich um reversible oder nicht reversible Radikalfänger handeln.

Die nicht reversiblen Radikalfänger werden auch als nicht cyclisch wirksame Radikalfänger bezeichnet. Sie unterbrechen die Kettenreaktion und werden dabei verbraucht (vgl. a. das Lehrbuch von Johan Bieleman, »Lackadditive«, Wiley-VCH, Weinheim, New York, 1998, Seite 289).

Die reversiblen Radikalfänger werden auch als cyclisch wirksame Radikalfänger bezeichnet, die im Reaktionsmedium immer wieder regeneriert werden (vgl. a. das Lehrbuch von Johan Bieleman, Lackadditive, Wiley-VCH, Weinheim, New York, 1998, Seiten 293 bis 295; Denisov-Cyclus).

Beispiele geeigneter nicht reversibler Radikalfänger sind Phenole, Chinone und Phenothiazine. Vorzugsweise werden sie aus der Gruppe, bestehend aus Hydrochinon, Hydrochinonmonomethylether, p-Kresol, 2,6-Di-tert.-butyl-4-methoxyphenol, Guajacol, o-Isopropylphenol, p-Benzochinon, p-Nitrosophenol und Phenothiazin (PTZ), ausgewählt.

Geeignete reversible Radikalfänger sind sterisch gehinderte Amine, die auch als HALS (Hindered Amine Light Stabilizers) bezeichnet werden. Bekanntermaßen enthalten sie mindestens einen Rest, ausgewählt aus der Gruppe, bestehend aus dem 2,2,6,6-Tetramethyl-4-piperidinyl-Rest, den 1-Alkyl-2,2,6,6-tetramethyl-4-piperidinyl-Resten, den 1-Alkyloxy-2,2,6,6-tetramethyl-4-piperidinyl-Resten und dem 1-Oxyl-2,2,6,6-tetramethyl-4-piperidinyl-Rest.

Beispiele gut geeigneter reversibler Radikalfänger, die mindestens einen Rest, ausgewählt aus der Gruppe, bestehend aus dem 2,2,6,6-Tetramethyl-4-piperidinyl-Rest, den 1-Alkyl-2,2,6,6-tetramethyl-4-piperidinyl-Resten und den 1-Alkyloxy-2,2,6,6-tetramethyl-4-piperidinyl-Resten enthalten, sind aus dem Lehrbuch von Johan Bieleman, »Lackadditive«, Wiley-VCH, Weinheim, New York, 1998, Seiten 294 und 295, bekannt.

Ein Beispiel für einen gut geeigneten reversiblen Radikalfänger, der einen 1-Oxyl-2,2,6,6-tetramethyl-4-piperidinyl-Rest enthält, ist 4-Hydroxy-2,2,6,6-tetramethyl-1-oxyl-piperidin (OH-Tempo).

Insbesondere wird Phenothiazin verwendet.

Die erfindungsgemäßen Gemische enthalten außerdem mindestens eine, insbesondere eine, ionische Flüssigkeit.

Vorzugsweise sind die ionischen Flüssigkeiten bei Temperaturen < 100°C, bevorzugt < 50°C und insbesondere < 20°C flüssig.

Bekanntermaßen bestehen die ionischen Flüssigkeiten ausschließlich aus organischen Kationen und organischen oder anorganischen Anionen.

Als organische Kationen kommen alle Kationen in Betracht, wie sie üblicherweise in ionischen Flüssigkeiten verwendet werden. Vorzugsweise handelt es sich um nicht cyclische oder heterocyclische Oniumverbindungen.

Bevorzugt werden nicht cyclische und heterocyclische Oniumverbindungen aus der Gruppe, bestehend aus quartären Ammonium-, Oxonium-, Sulfonium- und Phosphonium-Kationen sowie aus Uronium-, Thiouronium- und Guanidinium-Kationen, bei denen die einfach positive Ladung über mehrere Heteroatome delokalisiert ist, verwendet.

Besonders bevorzugt werden quartäre Ammonium-Kationen und ganz besonders bevorzugt heterocyclische quartäre Ammonium-Kationen verwendet.

Insbesondere werden die heterocyclischen quartären Ammonium-Kationen aus der Gruppe, bestehend aus Pyrrolium-, Imidazolium-, 1H-Pyrazolium-, 3H-Pyrazolium-, 4H-Pyrazolium-, 1-Pyrazolinium-, 2-Pyrazolinium-, 3-Pyrazolinium-, 2,3-Dihydro-imidazolinium-, 4,5-Dihydro-imidazolinium-, 2,5-Dihydro-imidazolinium-, Pyrrolidinium-, 1,2,4-Triazolium- (quartäres Stickstoffatom in 1-Stellung), 1,2,4-Triazolium- (quartäres Stickstoffatom in 4-Stellung), 1,2,3-Triazolium- (quartäres Stickstoffatom in 1-Stellung), 1,2,3-Triazolium- (quartäres Stickstoffatom in 4-Stellung), Oxazolium-, Isooxazolium-, Thiazolium-, Isothiazolium-, Pyridinium-, Pyridazinium-, Pyrimidinium-, Piperidinium-, Morpholinium-, Pyrazinium-, Indolium-, Chinolinium-, Isochinolinium-, Chinoxalinium-und Indolinium-Kationen, ausgewählt.

Die vorstehend beschriebenen organischen Kationen sind an sich bekannte Spezies, die beispielsweise in den deutschen Patentanmeldungen
- DE 10 2005 055 815 A, Seite 6, Absatz [0033], bis Seite 15, Absatz [0074],
- DE 10 2005 035 103 A1, Seite 3, Absatz [0014], bis Seite 10, Absatz [0051], und
- DE 103 25 050 A1, der die Seiten 2 und 3 übergreifende Absatz [0006] in Verbindung mit Seite 3, Absatz [0011], bis Seite 5, Absatz [0020],

im Detail beschrieben werden. Auf die aufgeführten Passagen der deutschen Patentanmeldungen wird zu Zwecken der näheren Erläuterung der vorliegenden Erfindung ausdrücklich Bezug genommen.

Von den vorstehend beschriebenen organischen Kationen werden vor allem Imidazolium-Kationen, insbesondere das 1-Ethyl-3-methylimidazolium-Kation (EMIM) oder das 1-Butyl-3-methylimidazolium-Kation (BMIM), worin sich der quartäre Stickstoff jeweils in 1-Stellung befindet, verwendet.

Als anorganische und organische Anionen kommen alle Anionen in Betracht, wie sie üblicherweise in ionischen Flüssigkeiten verwendet werden. Beispiele geeigneter Anionen werden in den deutschen Patentanmeldungen
- DE 10 2005 055 815 A, Seite 2, Absatz [006] in Verbindung mit Seite 15, Absatz [0075], bis Seite 17, Absatz [0088], und
- DE 103 25 050 A1, der die Seiten 2 und 3 übergreifende Absatz [0006] in Verbindung mit Seite 5, Absatz [0021],
im Detail beschrieben. Auf die aufgeführten Passagen der deutschen Patentanmeldungen wird zu Zwecken der näheren Erläuterung der vorliegenden Erfindung ausdrücklich Bezug genommen.

Darüber hinaus kommen die Anionen von radikalisch polymerisierbaren, olefinisch ungesättigten Säuren, vorzugsweise die Anionen von radikalisch polymerisierbaren, Vinylgruppen enthaltenden Säuren in Betracht. Diese Anionen werden erfindungsgemäß bevorzugt verwendet.

Beispiele gut geeigneter Anionen sind die Anionen von Acrylsäure, Methacrylsäure, Ethacrylsäure, Chloracrylsäure, Cyanacrylsäure, Vinylessigsäure, Vinylphosphonsäure, Vinylsulfonsäure und Vinylbenzol-2-, -3- und 4-sulfonsäure, insbesondere von Acrylsäure und Methacrylsäure.

Die ionischen Flüssigkeiten können aus beliebigen Kombinationen der vorstehend beschriebenen organischen Kationen und organischen oder anorganischen Anionen zusammengesetzt sein, solange die Kombination eines bestimmten Kations mit einem bestimmten Anion nicht zu unerwünschten chemischen Reaktionen oder physikalischen Phasenumwandlungen wie den Bildung von Niederschlägen oder Phasentrennung führt, was aber der Fachmann anhand seines allgemeinen Fachwissens gegebenenfalls unter Zuhilfenahme einiger weniger orientierender Versuche leicht vorhersagen und daher vermeiden kann.

Besonders vorteilhafte ionische Flüssigkeiten, die erfindungsgemäß bevorzugt verwendet werden, sind EMIM- und BMIM-ethylsulfat, -acetat, -acrylat, -methacrylat und -methansulfonat, besonders bevorzugt EMIM- und BMIM-acrylat und -methacrylat und insbesondere EMIM-acrylat und -methacrylat.

In den erfindungsgemäßen Gemischen kam das Gewichtsverhältnis von Inhibitor der radikalischen Polymerisation zu ionischer Flüssigkeit außerordentlich breit variieren, was ein besonderer Vorteil ist. Vorzugsweise liegt das Gewichtsverhältnis bei 1 : 10.000 bis 10.000 : 1, bevorzugt 1 : 1000 bis 1000 : 1, besonders bevorzugt 1 : 500 bis 500 : 1 und insbesondere 1: 100 bis 100 : 1.

Vorzugsweise wird die Zusammensetzung der erfindungsgemäßen Gemische so eingestellt, dass sie bei Temperaturen < 100°C, bevor zu < 50°C und insbesondere < 40°C flüssig sind.

Die erfindungsgemäßen Gemische können außer den vorstehend beschriebenen erfindungswesentlichen Bestandteilen, den ionischen Flüssigkeiten und den Inhibitoren, noch weitere geeignete Bestandteile enthalten; vorzugsweise bestehen sie aus den erfindungswesentlichen Bestandteilen.

Vorzugsweise werden die erfindungsgemäßen Gemische nach dem erfindungsgemäßen Verfahren hergestellt. Dazu werden die vorstehend beschriebenen erfindungswesentlichen Bestandteile sowie gegebenenfalls weitere geeignete Bestandteile miteinander vermischt, wonach die resultierenden Gemische homogenisiert werden. Methodisch gesehen bietet das erfindungsgemäße Verfahren keine Besonderheiten, sondern kann mit Hilfe üblicher und bekannter Vorrichtungen zum Vermischen von Flüssigkeiten oder Flüssigkeiten und Feststoffen, wie Rührkessel, Extruder, Ultraturrax, Inline-Dissolver, Homogenisierungsdüsen oder Gegenstrommischer, durchgeführt werden.

Es ist ein ganz besonderer Vorteil der erfindungsgemäßen Gemische, dass sie sehr große Mengen an Inhibitoren enthalten können, ohne dass ihre Erstarrungspunkte unerwünscht hoch werden und/oder es zu unerwünschten Inhomogenitäten durch die Bildung von Schlieren, Niederschlägen und/oder Phasentrennungen kommt.

Die erfindungsgemäßen Gemische können in vielfältiger Weise verwendet werden. Mit besonderem Vorteil werden sie erfindungsgemäß zur Stabilisierung von radikalisch polymerisierbaren Monomeren gegen die radikalischen Polymerisation verwendet.

Bei dieser erfindungsgemäßen Verwendung zeigt es sich, dass die erfindungsgemäßen Gemische bereits in signifikant geringeren Konzentrationen als die Einzelkomponenten stabilisierend wirken, weswegen die erfindungsgemäßen Gemische in dieser Hinsicht eine synergistische Wirkung zeigen, die über die Summe der Wirkungen der Einzelkomponenten hinausgeht.

Für die erfindungsgemäße Verwendung können die erfindungsgemäßen Gemische in den gewünschten Konzentrationen den zu stabilisierenden, radikalisch polymerisierbaren Monomeren zugesetzt werden. Dazu können die vorstehend beschriebenen Mischvorrichtungen verwendet werden.

Es resultieren die erfindungsgemäßen stabilisierten Gemische, die mindestens eine, insbesondere eine, ionische Flüssigkeit, bevorzugt eine der vorstehend beschriebenen ionischen Flüssigkeiten, mindestens einen, insbesondere einen, Inhibitor der radikalischen Polymerisation, bevorzugt einen der vorstehend beschriebenen Inhibitoren der radikalischen Polymerisation, sowie mindestens ein radikalisch polymerisierbares Monomer enthalten.

Im Grunde kommen alle üblichen und bekannten radikalisch polymerisierbaren Monomere als Bestandteil der erfindungsgemäßen stabilisierten Gemische in Betracht.

Vorzugsweise werden die radikalisch polymerisierbaren Monomere aus der Gruppe, bestehend aus Vinylmonomeren der allgemeinen Formel I:

[CH₂=C(Y)-]ₙ-X (I),

ausgewählt.

In der allgemeinen Formel I steht der Index n für eine ganze Zahl von 1 bis 10, vorzugsweise 1 bis 6 und bevorzugt 1 bis 3. Insbesondere ist n gleich 1.

Die Variable X steht für ein Wasserstoffatom, ein Halogenatom, eine Carboxylgruppe, eine Sulfonsäuregruppe (-SO₃H), eine Phosphonsäuregruppe (-PO₃H₂), eine Silangruppe (-SiH₃) oder einen ein- bis zehnbindigen, vorzugsweise ein- bis sechsbindigen und bevorzugt ein- bis dreibindigen organischen oder metallorganischen Rest. Insbesondere handelt es sich um einen einbindigen organischen Rest.

Im Rahmen der vorliegenden Erfindung wird unter einem organischen Rest ein Rest verstanden, der mindestens ein Kohlenstoffatom enthält.

Unter einem metallorganischen Rest wird ein Rest verstanden, der mindestens ein Kohlenstoffatom sowie mindestens ein Siliziumatom und/oder mindestens ein Boratom, insbesondere mindestens ein Siliziumatom, enthält.

Der organische und der metallorganische Rest können niedermolekular, oligomer oder polymer sein. »Niedermolekular« bedeutet, dass der betreffende Rest aus einer Struktureinheit oder zwei gleichen oder verschiedenen Struktureinheiten aufgebaut ist. »Oligomer« bedeutet, dass der betreffende Rest aus 2 bis 12 gleichen oder verschiedenen Struktureinheiten aufgebaut ist. »Polymer« bedeutet, dass der betreffende Rest aus mehr als 12 gleichen oder verschiedenen Struktureinheiten aufgebaut ist.

Die Struktureinheiten des organischen und des metallorganischen Rest können mindestens ein Heteroatom, vorzugsweise ausgewählt aus der Gruppe, bestehend aus Sauerstoff, Schwefel, Stickstoff, Phosphor, Fluor, Chlor und Brom, bevorzugt Sauerstoff, Schwefel und Phosphor, insbesondere Sauerstoff, enthalten.

Besonders bevorzugt werden die Vinylmonomeren der allgemeinen Formel I eingesetzt, worin n für 1 und X für ein Wasserstoffatom, ein Halogenatom, eine Sulfonsäuregruppe, eine Phosphonsäuregruppe, eine Silangruppe (-SiH₃) oder einen einbindigen organischen oder metallorganischen Rest stehen. Solche Monomere werden auch als Vinylmonomere im engeren Sinne bezeichnet (vgl. a. Römpp Online 2007, »Vinylmonomere«).

Beispiele gut geeigneter Halogenatome X sind Fluor, Chlor und Brom, insbesondere Chlor.

Beispiele gut geeigneter einbindiger organischer Reste X sind
- Alkylreste R vorzugsweise mit 1 bis 12, bevorzugt 1 bis 10 und insbesondere 1 bis 8 Kohlenstoffatomen;
- Cycloalkylreste R vorzugsweise mit 3 bis 10, bevorzugt 4 bis 8 und insbesondere 5 oder 6 Kohlenstoffatomen;
- Arylreste R vorzugsweise mit 6 bis 22, bevorzugt 6 bis 16 und insbesondere 6 bis 10 Kohlenstoffatomen;
- Alkyl-, Cycloalkyl- und Aryletherreste (-OR), worin der Rest R vorzugsweise aus der Gruppe, bestehend aus den vorstehend genannten Alkylresten, Cycloalkylresten und Arylresten R, ausgewählt ist;
- Nitrilgruppe (-CN);
- Carboxylgruppe (-COOH);
- Carboxylalkylester-Reste (-O-CO-R oder -CO-O-R) vorzugsweise mit 1 bis 10, bevorzugt 1 bis 8 und insbesondere 1 bis 6 Kohlenstoffatomen im Alkylrest R;
- Carboxylcycloalkylester-Reste (-O-CO-R oder -CO-O-R) vorzugsweise mit 3 bis 10, bevorzugt 4 bis 8 und insbesondere 5 bis 6 Kohlenstoffatomen im Cycloalkylrest R;
- Carboxylarylester-Reste (-O-CO-R oder -CO-O-R) vorzugsweise mit 6 bis 22, bevorzugt 6 bis 16 und insbesondere 6 bis 10 Kohlenstoffatomen im Arylrest R;
- Carboxylamid-Rest (-CO-NH₂);
- Carboxylamid-Reste (-CO-NRH oder -CO-NR₂), die am Stickstoff mit mindestens einem Rest R substituiert sind, der vorzugsweise aus der Gruppe, bestehend aus den vorstehend genannten Alkylresten, Cycloalkylresten und Arylresten R, wobei zwei Reste R auch cyclisch miteinander verknüpft sein können, ausgewählt ist;
- Carboxylamid-Reste (-NR-CO-R), worin der Rest R vorzugsweise aus der Gruppe, bestehend aus den vorstehend genannten Alkylresten, Cycloalkylresten und Arylresten R sowie Wasserstoffatom, ausgewählt ist oder worin die beiden Reste R cyclisch miteinander verknüpft sind, so dass vorzugsweise ein vier-, fünf- oder sechsgliedriger Ring resultiert; und
- Aminoreste (-NHR oder -NR₂), die am Stickstoffatom mit mindestens einem Rest substituiert sind, der vorzugsweise aus der Gruppe, bestehend aus den vorstehend genannten Alkylresten, Cycloalkylresten und Arylresten R, wobei zwei Reste R auch cyclisch miteinander verknüpft sein können, ausgewählt ist;
wobei die Reste R substituiert oder unsubstituiert sein können.

Beispiele gut geeigneter Substituenten für die substituierten Reste R sind Halogenatome, bevorzugt Fluor, Chlor und Brom, insbesondere Fluor und Chlor, Nitrilgruppen, Nitrogruppen, Carboxylgruppen, Sulfonsäuregruppen, Etherreste (-OR), Esterreste (-O-CO-R oder -CO-O-R), Carboxylamid-Reste (-NH-CO-R) und Aminoreste (-NHR oder -NR₂), insbesondere Carboxylgruppen und Sulfonsäuregruppen. Hierin haben die Reste R die vorstehend angegebene Bedeutung.

Beispiele gut geeigneter einbindiger metallorganischer Reste X sind
- Silylreste (-SiH₂R, -SiHR₂ oder -SiR₃), worin der Rest R vorzugsweise aus der Gruppe, bestehend aus den vorstehend genannten Alkylresten, Cycloalkylresten und Arylresten R, wobei 2 oder 3 Reste R auch cyclisch miteinander verknüpft sein können, ausgewählt ist; und
- Silyletherreste (-SiH₂(OR), -SiH(OR)₂, -Si(OR)₃, -SiHR(OR), -SiR₂(OR), oder - SiR(OR)₂), worin der Rest R vorzugsweise aus der Gruppe, bestehend aus den vorstehend genannten Alkylresten R, Cycloalkylresten und Arylresten R, wobei 2 oder 3 Reste R auch cyclisch miteinander verknüpft sein können, ausgewählt ist;
wobei diese Silylreste und Silyletherreste X auch über ein Sauerstoffatom mit der Vinylgruppe verbunden sein können.

In der allgemeinen Formel 1 steht die Variable Y für ein Wasserstoffatom, ein Halogenatom, eine Nitrilgruppe, eine Alkylgruppe mit 1 bis 20 Kohlenstoffatomen, eine Cycloalkylgruppe mit 3 bis 20 Kohlenstoffatomen oder eine Arylgruppe mit 6 bis 22 Kohlenstoffatomen, bevorzugt für ein Wasserstoffatom, ein Halogenatom, eine Nitrilgruppe, eine Methylgruppe oder Ethylgruppe, insbesondere für ein Wasserstoffatom oder eine Methylgruppe.

Gut geeignete Vinylmonomere I entstammen den Verbindungsklassen der 1-Olefine, Vinylhalogenide, Vinylaromaten, Vinylether, Vinylester, Vinylamide, Vinylsilane, Vinylsilylether, Vinylsiloxane, Vinylamine, Vinylamide, Vinylsulfonsäure, Vinylphosphonsäure, Vinylcarbonsäuren, Vinylaromatsulfonsäuren, Acrylsäuren, Acrylsäureester, Acrylamide, Acrylnitrile, Allylether und Allylester.

Besonders gut geeignete Vinylmonomere I entstammen den Verbindungsklassen der 1-Olefine, Vinylhalogenide, Vinylaromaten, Vinylether, Vinylester, Vinylamide, Vinylsulfonsäure, Vinylphosphonsäure, Vinylcarbonsäuren, Vinylaromatsulfonsäuren, Acrylsäuren, Acrylsäureester, Acrylamide und Acrylnitrile.

Beispiele besonders gut geeigneter 1-Olefine I sind Ethylen, Propen, 1-Buten, 1-Penten und 1-Hexen.

Beispiele besonders gut geeigneter Vinylhalogenide I sind Vinylfluorid, Vinylchlorid und Vinylbromid.

Beispiele besonders gut geeigneter Vinylaromaten I sind Styrol und alpha-Methylstyrol.

Beispiele besonders gut geeigneter Vinylether I sind Vinylmethyl-, Vinylethyl-, Vinylpropyl- und Vinylbutylether.

Beispiele besonders gut geeigneter Vinylester I sind Vinylacetat und Vinylpropionat.

Beispiele besonders gut geeigneter Vinylamide I sind N-Vinylformamid, N-Vinylacetamid, N-Vinylpyrrolidon und N-Vinylcaprolactam.

Ein Beispiel für eine besonders gut geeignete Vinylcarbonsäuren I ist Vinylessigsäure.

Beispiele besonders gut geeigneter Vinylaromatsulfonsäuren I sind Vinylbenzol-2-, -3-und -4-sulfonsäure.

Beispiele besonders gut geeigneter Acrylsäuren I sind Acrylsäure, Methacrylsäure, Ethacrylsäure, Chloracrylsäure und Cyanacrylsäure, insbesondere Acrylsäure und Methacrylsäure.

Beispiele besonders gut geeigneter Acrylsäureester I sind Acrylsäure- und Methacrylsäuremethylester, -ethylester, -propylester, -i-propylester, -n-butylester, -i-butylester -1,1-diethylbutylester, -2-ethylhexylester, -1,1-diethylpropylester, -1-methyl-1-ethylpropylester, -1-methyl-1-ethylbutylester, -1,1-dimethylbutylester, -1,1-dimethylpropylester und -tert.-butylester, bevorzugt Acrylsäuremethylester, Acrylsäureethylester, Acrylsäure-n-butylester, Acrylsäure-tert-butylester oder tert-Butylacrylat (TBA), Acrylsäure-2-ethylhexylester oder 2-Ethylhexylacrylat (EHA), Methacrylsäuremethylester, Methacrylsäureethylester, Methacrylsäure-n-butylester, Methacrylsäure-tert-butylester oder tert-Butylmethacrylat (TBMA) und Methacrylsäure-2-ethylhexylester oder 2-Ethylhexylmethacrylat (MEHA), insbesondere TBA und TBMA.

Beispiele besonders gut geeigneter Acrylamide I sind Acrylamid und Methacrylamid.

Beispiele besonders gut geeigneter Acrylnitrile I sind Acrylnitril und Methacrylnitril.

Bevorzugt werden die vorstehend beschriebene Vinylsulfonsäure oder Vinylphosphonsäure oder die vorstehend beschriebenen Vinylcarbonsäuren, Vinylaromatsulfonsäuren oder Acrylsäuren, insbesondere Acrylsäure oder Methacrylsäure, als zu stabilisierende Monomere in den erfindungsgemäßen stabilisierten Gemischen eingesetzt.

Besonders vorteilhafte erfindungsgemäße stabilisierte Gemische resultieren, wenn die ionische Flüssigkeit als Anion das Anion der zu stabilisierenden Säure, insbesondere aber das Acrylat- oder das Methacrylat-Anion, enthält.

Ganz besonders vorteilhafte erfindungsgemäße stabilisierte Gemische enthalten demnach Acrylsäure und eine ionische Flüssigkeit, die Acrylat-Anionen enthält, oder Methacrylsäure und eine ionische Flüssigkeit die Methacrylat-Anionen enthält.

Weitere besondere Vorteile resultieren, wenn als Kation EMIM oder BMIM, insbesondere EMIM, verwendet wird.

Zusätzliche besondere Vorteile resultieren, wenn als Inhibitor der radikalischen Polymerisation PTZ verwendet wird.

Der Gehalt der erfindungsgemäßen stabilisierten Gemische an zu stabilisierendem Monomer, ionischer Flüssigkeit und Inhibitor der radikalischen Polymerisation kann sehr breit variieren und daher vorteilhaft den Erfordernissen des Einzelfalls angepasst werden.

Vorzugsweise enthalten die erfindungsgemäßen stabilisierten Gemische das zu stabilisierende Monomer in einer Menge von 10 bis 99,999 Gew.-%, bevorzugt 15 bis 99,99 Gew.-% und insbesondere 20 bis 99,9 Gew.-%, jeweils bezogen auf ein erfindungsgemäßes stabilisiertes Gemisch.

Vorzugsweise enthalten die erfindungsgemäßen stabilisierten Gemische die ionische Flüssigkeit in einer Menge von 0,01 bis 2 Gew.-%, bevorzugt 0,05 bis 1 Gew.-% und insbesondere 0,08 bis 0,5 Gew.-%.

Vorzugsweise enthalten die erfindungsgemäßen stabilisierten Gemische den Inhibitor der radikalischen Polymerisation in einer Konzentration von 1 bis 500 ppm, bevorzugt 2 bis 100 ppm und insbesondere 3 bis 50 ppm.

Darüber hinaus können die erfindungsgemäßen stabilisierten Gemische weitere Bestandteile enthalten. Art und Menge dieser weiteren Bestandteile richten sich nach dem Verwendungszweck der erfindungsgemäßen stabilisierten Gemische. Beispiele geeigneter weiterer Bestandteile sind niedrig siedende und/oder hochsiedende organische Lösemittel; Photoinitiatoren; UV-Absorber; Lichtschutzmittel wie Benztriazole oder Oxalanilide; thermolabile radikalische Initiatoren wie organische Peroxide, organische Azoverbindungen oder C-C-spaltende Initiatoren wie Dialkylperoxide, Peroxocarbonsäuren, Peroxodicarbonate, Peroxidester, Hydroperoxide, Ketonperoxide, Azodinitrile oder Benzpinakolsilylether; Entschäumer; Emulgatoren; Netzmittel; Reaktionspartner für die zu stabilisierenden Monomere, bei deren Umsetzungen die olefinische(n), insbesondere die vinylische(n), Doppelbindung(en) erhalten bleibt oder bleiben; sowie Katalysatoren für diese Umsetzungen.

Die erfindungsgemäßen stabilisierten Gemische können in einfacher Weise hergestellt, gehandhabt und gelagert werden. Sie sind daher in vielfältiger Weise mit Vorteil verwendbar. Insbesondere können die stabilisierten Monomere mit Reaktionspartnern unter Erhalt der olefinische(n), insbesondere der vinylische(n), Doppelbindung(en) umgesetzt werden, so dass stofflich unterschiedliche, wirtschaftlich und technisch wertvolle, radikalisch polymerisierbare Monomere resultieren.

Hierbei zeigt es sich, dass die erfindungsgemäßen stabilisierten Gemische auf der Basis der vorstehend beschriebenen Carbonsäure-, Sulfonsäure- und Phosphonsäuregruppen, bevorzugt Carbonsäuregruppen, enthaltenden Vinylmonomeren der allgemeinen Formel I, insbesondere aber auf Basis von Acrylsäure oder Methacrylsäure, hervorragend für die Herstellung von Estern, insbesondere von tert.-Alkylestern, geeignet sind.

Für Herstellung von tert.-Alkylestern der Acrylsäure oder der Methacrylsäure wird Acrylsäure oder Methacrylsäure mit einem erfindungsgemäßen Gemisch, insbesondere einem Gemisch aus EMIM-acrylat und PTZ oder aus EMIM-methacrylat und PTZ, stabilisiert.

Das resultierende erfindungsgemäße stabilisierte Gemisch wird mit einem sauren Katalysator versetzt. Beispiele geeigneter saurer Katalysatoren sind starke anorganische und organische Säuren, wie Mineralsäuren oder Sulfonsäuren. Beispiele gut geeigneter Mineralsäuren sind Schwefelsäure, Phosphorsäure und Polyphosphorsäure, insbesondere Schwefelsäure. Beispiele gut geeigneter Sulfonsäuren sind para-Toluol-, Benzol-, Dodecylbenzol- und Methansulfonsäure.

Anschließend wird die erfindungsgemäß stabilisierte Acrylsäure oder Methacrylsäure analog der in der deutschen Patentanmeldung DE 100 36 959 A1 angegebenen Vorschrift beispielsweise mit Isobuten umgesetzt, wodurch tert-Butylacrylat (TBA) oder tert-Butylmethacrylat (TBMA) in besonders hoher Ausbeute und besonders hoher Reinheit resultiert.

### Beispiele und Vergleichsversuche

### Herstellbeispiel 1

Die Herstellung von 1-Ethyl-3-methylimidazolium(EMIM)-acrylat

525 g EMIM-chlorid wurden in 500 g trockenem Ethanol gelöst. Die resultierende Lösung wurde mit 474 g Kaliumacrylat und 0,5 g Phenothiazin (PTZ) versetzt. Anschließend wurde das resultierende Reaktionsgemisch während 72 Stunden bei 24°C unter Stickstoff gerührt. Es bildete sich eine Suspension, die abfiltriert wurde. Das Filtrat wurde bei 60°C und 50 mbar am Rotationsverdampfer eingedampft. Hierbei fiel erneut Feststoff aus, der ebenfalls abfiltriert wurde. Restliches Ethanol wurde durch fünfstündiges Strippen mit Stickstoff bei 45°C aus der ionischen Flüssigkeit entfernt. In ihrem ¹H-NMR-Spektrum waren keine Verunreinigungen erkennbar. Ihr Chloridgehalt war < 1%. Sie wies ein hohes Lösevermögen für Inhibitoren der radikalischen Polymerisation, insbesondere für PTZ, auf.

### Beispiele 1 bis 6

### Die Herstellung von Lösungen von PTZ in ionischen Flüssigkeiten

Die Lösungen von PTZ in ionischen Flüssigkeiten der Beispiele 1 bis 6 wurden hergestellt, indem man PTZ den ionischen Flüssigkeiten bei Raumtemperatur so lange zudosierte, bis die Lösungen gesättigt waren. Die Tabelle 1 gibt einen Überblick über das Lösevermögen der verwendeten ionischen Flüssigkeiten.

**Tabelle 1: Lösevermögen von ionischen Flüssigkeiten für PTZ bei 23°C**

| Beispiel | ionische Flüssigkeit | Lösevermögen/Gew.-% PTZ |
|---|---|---|
| 1 | EMIM-ethylsulfat | 41 |
| 2 | EMIM-acetat | 60 |
| 3 | EMIM-acrylat | 16 |
| 4 | EMI M-methansulfonat | 40 |
| 5 | BMIM^{a)}-acetat | 55 |
| 6 | BMIM^{a)}-TFSA^{b)} | 6,5 |

a) 1-Butyl-3-methyl-imidazolium;
b) Bis(trifluormethylsulfonyl)amid

Das hohe Lösevermögen der ionischen Flüssigkeiten für PTZ ermöglichte es, den Inhibitor in der Form hoch konzentrierter Lösungen zur Stabilisierung von radikalisch polymerisierbaren Monomeren einzusetzen, was verfahrenstechnisch von Vorteil war.

### Beispiel 7

Die Stabilisierung von Acrylsäure mit einer Lösung von PTZ in EMIM-acrylat

Zweifach destillierte Acrylsäure wurde mit einer 16-prozentigen Lösung von PTZ in EMIM-acrylat versetzt, so dass eine Konzentration von PTZ in Acrylsäure von 100 ppm resultierte. Das resultierende stabilisierte Gemisch wurde in 2 Proben aufgeteilt, von denen eine stehend und die andere drehend bei 120°C an der Luft getempert wurden. Selbst nach 8 Stunden war keine Polymerisation festzustellen.

### Vergleichsversuche V1 und V2

Die Stabilisierung von Acrylsäure mit PTZ oder mit EMIM-acrylat

Beispiel 7 wurde wiederholt, nur dass anstelle von PTZ in EMIM-acrylat PTZ in einer Konzentration von 10 ppm (Vergleichsversuch V1) und EMIM-acrylat in einer Konzentration von 1000 ppm (Vergleichsversuch V2) verwendet wurden.

Im Falle des Vergleichsversuchs V1 waren die Proben bereits nach etwa 2 Stunden und im Falle des Vergleichsversuchs V2 bereits nach etwa 22 Minuten polymerisiert.

## Patentansprüche

1. Gemische, enthaltend mindestens einen Inhibitor der radikalischen Polymerisation und mindestens eine ionische Flüssigkeit.

2. Gemische nach Anspruch 1, **dadurch gekennzeichnet, dass** der Inhibitor der radikalischen Polymerisation aus der Gruppe, bestehend aus reversiblen und nicht reversiblen Radikalfängern, ausgewählt ist.

3. Gemische nach Anspruch 2, **dadurch gekennzeichnet, dass** der nicht reversible Radikalfänger aus der Gruppe, bestehend aus Phenolen, Chinonen und Phenothiazinen, und der reversible Radikalfänger aus der Gruppe, bestehend aus sterisch gehinderten Aminen und sterisch gehinderten N-Oxyl-Verbindungen ausgewählt ist.

4. Gemische nach Anspruch 3, **dadurch gekennzeichnet, dass** der
- nicht reversible Radikalfänger aus der Gruppe, bestehend aus Hydrochinon, Hydrochinonmonomethylether, p-Kresol, 2,6-Di-tert.-butyl-4-methoxyphenol, Guajacol, o-Isopropylphenol, p-Benzochinon, p-Nitrosophenol und Phenothiazin; und
- der reversible Radikalfänger aus der Gruppe, bestehend aus Verbindungen, die mindestens einen Rest, ausgewählt aus der Gruppe, bestehend aus dem 2,2,6,6-Tetramethyl-4-piperidinyl-Rest, den 1-Alkyl-2,2,6,6-tetramethyl-4-piperidinyl-Resten, den 1-Alkyloxy-2,2,6,6-tetramethyl-4-piperidinyl-Resten und dem 1-Oxyl-2,2,6,6-tetramethyl-4-piperidinyl-Rest, enthalten;
ausgewählt ist.

5. Gemische nach Anspruch 4, **dadurch gekennzeichnet, dass** der Inhibitor der radikalischen Polymerisation Phenothiazin ist.

6. Gemische nach einem der Ansprüche 1 bis 5, **dadurch gekennzeichnet, dass** die Gemische homogen sind.

7. Gemische nach einem der Ansprüche 1 bis 6, **dadurch gekennzeichnet, dass** die Gemische bei Temperaturen < 100°C flüssig sind.

8. Gemische nach einem der Ansprüche 1 bis 7, **dadurch gekennzeichnet, dass** das Gewichtsverhältnis von Inhibitor der radikalischen Polymerisation zu ionischer Flüssigkeit bei 1 : 10.000 bis 10.000 : 1 liegt.

9. Gemische nach einem der Ansprüche 1 bis 8, **dadurch gekennzeichnet, dass** die ionischen Flüssigkeiten bei Temperaturen < 100°C flüssig sind.

10. Gemische nach einem der Ansprüche 1 bis 9, **dadurch gekennzeichnet, dass** die ionischen Flüssigkeiten ausschließlich aus organischen Kationen und organischen oder anorganischen Anionen bestehen.

11. Gemische nach Anspruch 10, **dadurch gekennzeichnet, dass** die organischen Kationen nicht cyclische oder heterocyclische Oniumverbindungen sind.

12. Gemische nach Anspruch 11, **dadurch gekennzeichnet, dass** die nicht cyclischen und heterocyclischen Oniumverbindungen aus der Gruppe, bestehend aus quartären Ammonium-, Oxonium-, Sulfonium- und Phosphonium-Kationen sowie aus Uronium-, Thiouronium- und Guanidinium-Kationen, bei denen die einfach positive Ladung über mehrere Heteroatome delokalisiert ist, ausgewählt sind.

13. Gemische nach Anspruch 12, **dadurch gekennzeichnet, dass** die heterocyclischen quartären Ammonium-Kationen aus der Gruppe, bestehend aus Pyrrolium-, Imidazolium-, 1H-Pyrazolium-, 3H-Pyrazolium-, 4H-Pyrazolium-, 1-Pyrazolinium-, 2-Pyrazolinium-, 3-Pyrazolinium-, 2,3-Dihydro-imidazolinium-, 4,5-Dihydro-imidazolinium-, 2,5-Dihydro-imidazolinium-, Pyrrolidinium-, 1,2,4-Triazolium- (quartäres Stickstoffatom in 1-Stellung), 1,2,4-Triazolium-(quartäres Stickstoffatom in 4-Stellung), 1,2,3-Triazolium- (quartäres Stickstoffatom in 1-Stellung), 1,2,3-Triazolium- (quartäres Stickstoffatom in 4-Stellung), Oxazolium-, Isooxazolium-, Thiazolium-, Isothiazolium-, Pyridinium-, Pyridazinium-, Pyrimidinium-, Piperidinium-, Morpholinium-, Pyrazinium-, Indolium-, Chinolinium-, Isochinolinium-, Chinoxalinium- und Indolinium-Kationen, ausgewählt sind.

14. Gemische nach Anspruch 13, **dadurch gekennzeichnet, dass** die heterocyclischen quartären Ammonium-Kationen Imidazolium-Kationen sind.

15. Gemische nach Anspruch 14, **dadurch gekennzeichnet, dass** die Anionen aus der Gruppe, bestehend aus Anionen von radikalisch polymerisierbaren, olefinisch ungesättigten Säuren, ausgewählt sind.

16. Gemische nach Anspruch 15, **dadurch gekennzeichnet, dass** die radikalisch polymerisierbaren, olefinisch ungesättigten Säuren aus der Gruppe, bestehend aus radikalisch polymerisierbaren, Vinylgruppen enthaltenden Säuren, ausgewählt sind.

17. Gemische nach Anspruch 16, **dadurch gekennzeichnet, dass** die radikalisch polymerisierbaren, Vinylgruppen enthaltenden Säuren aus der Gruppe, bestehend aus Acrylsäure, Methacrylsäure, Ethacrylsäure, Chloracrylsäure, Cyanacrylsäure, Vinylessigsäure, Vinylphosphonsäure, Vinylsulfonsäure und Vinylbenzol-2-, -3- und -4-sulfonsäure, ausgewählt sind.

18. Gemische nach Anspruch 17, **dadurch gekennzeichnet, dass** die radikalisch polymerisierbaren, Vinylgruppen enthaltenden Säuren Acrylsäure und Methacrylsäure sind.

19. Verfahren zur Herstellung von Gemischen gemäß einem der Ansprüche 1 bis 18, **dadurch gekennzeichnet, dass** man mindestens eine ionische Flüssigkeit mit mindestens einem Inhibitor der radikalischen Polymerisation vermischt und das resultierende Gemisch homogenisiert.

20. Verwendung der Gemische gemäß einem der Ansprüche 1 bis 18 und der nach dem Verfahren gemäß Anspruch 19 hergestellten Gemische zur Stabilisierung von radikalisch polymerisierbaren Monomeren gegen die radikalische Polymerisation.

21. Gegen die radikalische Polymerisation stabilisierte Gemische, enthaltend mindestens ein radikalisch polymerisierbares Monomer, mindestens eine ionische Flüssigkeit und mindestens einen Inhibitor der radikalischen Polymerisation.

22. Gegen die radikalische Polymerisation stabilisierte Gemische gemäß Anspruch 21, **dadurch gekennzeichnet, dass** sie mindestens eine ionische Flüssigkeit, wie in einem der Ansprüche 9 bis 18 definiert, enthalten.

23. Gegen die radikalische Polymerisation stabilisierte Gemische gemäß Anspruch 21 oder 22, **dadurch gekennzeichnet, dass** sie mindestens einen Inhibitor der radikalischen Polymerisation, wie in einem der Ansprüche 2 bis 5 definiert, enthalten.

24. Gegen die radikalische Polymerisation stabilisierte Gemische gemäß einem der Ansprüche 21 bis 23, **dadurch gekennzeichnet, dass** die radikalisch polymerisierbaren Monomere aus der Gruppe, bestehend aus Vinylmonomeren der allgemeinen Formel 1:
[CH₂=C(Y)-]ₙ-X (I),
worin der Index und die Variablen die folgende Bedeutung haben:
n ganze Zahl von 1 bis 10;
X Wasserstoffatom, Halogenatom, Carboxylgruppe, Sulfonsäuregruppe, Phosphonsäuregruppe, Silangruppe (-SiH₃) oder ein- bis zehnbindiger organischer oder metallorganischer Rest;
Y Wasserstoffatom, Halogenatom, Nitrilgruppe, Alkylgruppe mit 1 bis 20 Kohlenstoffatomen, Cyclolkylgruppe mit 3 bis 20 Kohlenstoffatomen oder Arylgruppe mit 6 bis 22 Kohlenstoffatomen;
ausgewählt sind.

25. Gegen die radikalische Polymerisation stabilisierte Gemische nach Anspruch 24, **dadurch gekennzeichnet, dass** n = 1.

26. Gegen die radikalische Polymerisation stabilisierte Gemische nach Anspruch 24 oder 25, **dadurch gekennzeichnet, dass** X für eine Carboxylgruppe, Sulfonsäuregruppe, Phosphonsäuregruppe, Methylencarbonsäuregruppe oder einen Benzol-2-, -3-, oder -4-sulfonsäure -1-yl-Rest steht.

27. Gegen die radikalische Polymerisation stabilisierte Gemische nach Anspruch 26, **dadurch gekennzeichnet, dass** X = Carboxylgruppe.

28. Gegen die radikalische Polymerisation stabilisierte Gemische nach einem der Ansprüche 24 bis 27, **dadurch gekennzeichnet, dass** Y für ein Wasserstoffatom, ein Chloratom, eine Nitrilgruppe, eine Methylgruppe oder eine Ethylgruppe steht.

29. Gegen die radikalische Polymerisation stabilisierte Gemische nach Anspruch 28, **dadurch gekennzeichnet, dass** Y = Wasserstoffatom oder Methylengruppe.

30. Gegen die radikalische Polymerisation stabilisierte Gemische nach Anspruch 29, **dadurch gekennzeichnet, dass** das Vinylmonomer I Acrylsäure oder Methacrylsäure ist.

31. Gegen die radikalische Polymerisation stabilisierte Gemische nach Anspruch 30, **dadurch gekennzeichnet, dass** das Anion der ionischen Flüssigkeit Acrylat oder Methacrylat ist.
